# EUROPÄISCHE PATENTANMELDUNG

(11) **EP 1 326 351 A2**
(43) Veröffentlichungstag der Anmeldung: **09.07.2003**
(21) Anmeldenummer: 02020935.9
(22) Anmeldetag: 19.09.2002
(51) Int. Cl.: H04B 7/08, G01S 7/03

(54) **Vorrichtung für ein Radarsystem**

(30) Priorität: 21.12.2001 DE 10163653
(71) Anmelder: ROBERT BOSCH GMBH, 70442 Stuttgart (DE)
(72) Erfinder: Winter, Klaus, 71701 Schwieberdingen (DE); Mayer, Hermann, 71665 Vaihingen (DE); Lucas, Bernhard, 74354 Besigheim (DE); Beez, Thomas, 74189 Weinsberg (DE); Hildebrandt, Juergen, 73235 Weilheim (DE); Hauk, Joachim, 71272 Renningen-Malmsheim (DE); Olbrich, Herber, 71277 Rutesheim (DE); Kugler, Andreas, 73553 Alfdorf (DE); Ehrlinger, Wolfgang, 71546 Aspach (DE)

(57) **Zusammenfassung**

Vorgeschlagen wird eine Vorrichtung für ein Radarsystem, der als Eingangssignale die Empfangssignale mindestens zweier Empfangsantennen zugeführt werden und bei der die Ausgangssignale dieser Vorrichtung mindestens einer Einrichtung zur Auswertung der Empfangssignale zugeführt werden, die mindestens zwei Auswertekanäle umfaßt. In Abhängigkeit zugeführter Steuersignale werden den mindestens zwei Auswertekanälen unterschiedliche Eingangskanäle zugeordnet.

## Beschreibung

Die vorliegende Erfindung betrifft eine Vorrichtung für ein Radarsystem, der als Eingangssignale die Empfangssignale mindestens zweier Empfangsantennen zugeführt werden und bei der die Ausgangssignale dieser Vorrichtung mindestens einer Einrichtung zur Auswertung der Empfangssignale zugeführt werden, die mindestens zwei Auswertekanäle umfaßt. In Abhängigkeit zugeführter Steuersignale werden den mindestens zwei Auswertekanälen unterschiedliche Eingangskanäle zugeordnet.

### Stand der Technik

Die WO 97/02496 beschreibt einen monostatischen FMCW-Radarsensor für ein Fahrzeug zur Detektion von Objekten, bei dem wenigstens ein Antennen-Feed in Verbindung mit einer dielektrischen Linse sowohl zum Senden als auch Empfangen eines entsprechenden Echosignals vorgesehen ist. Wenigstens ein Antennen-Feed ist über einen Rat-Race-Ring oder einen Doppel-Rat-Race-Ring mit einem Ringmischer verbunden, so dass auf einen aufwendigen Zirkulator verzichtet werden kann. Diese Vorrichtung sieht ein dreikanaliges Sende- und Empfangskonzept vor, bei dem zur Auswertung der empfangenen Signale für jeden der drei Kanäle eine eigene Auswerteeinrichtung vorgesehen ist. Bei dieser Vorrichtung ist jeder Empfangsantenne ein Auswertekanal fest zugeordnet.

In der EP 0733913 A2 ist ein Radarmodul offenbart, das eine Vielzahl an Antennen, Sendeeinrichtungen und Empfangseinrichtungen aufweist. Die empfangenen Signale werden über einen Selektor einem AD-Wandler zugeführt, wobei der Selektor reihum abwechselnd einen Kanal durchschaltet.

### Kern und Vorteile der ERfindung

Der Kern der vorliegenden Erfindung ist es, eine Vorrichtung anzugeben, die es erlaubt, die Ausgangssignale einer Vielzahl von Empfangsantennen einer oder mehreren Auswerteeinrichtungen zuzuführen, wobei die Auswerteeinrichtung auch mehrere Auswertekanäle umfassen kann. Dabei ist es vorgesehen, dass die Anzahl der Auswertekanäle kleiner oder gleich der Anzahl der Empfangsantennen ist. Durch die erfindungsgemäße Vorrichtung wird es ermöglicht, einen Teil der Empfangssignale in flexibler und schnell umschaltbarer Weise den Auswertekanälen zuzuordnen. Hierdurch reduziert sich die notwendige Anzahl an teuren und komplizierten Auswerteeinrichtungen bzw. Auswertekanälen. Erfindungsgemäß wird dieses durch die Merkmale es unabhängigen Anspruchs gelöst.

Vorteilhafte Weiterbildungen und Ausgestaltungen ergeben sich aus den Unteransprüchen.

Vorteilhafterweise handelt es sich bei den Eingangssignalen der erfindungsgemäßen Vorrichtung um demodulierte Empfangssignale. Durch das Vorsehen demodulierter Empfangssignale ist es nicht notwendig, die erfindungsgemäße Vorrichtung für einen hohen Frequenzbereich, der im Bereich der Trägerfrequenz von vorteilhafterweise 77 GHz liegt, auszulegen.

Weiterhin ist es vorteilhaft, dass zeitgleich mehrere Eingangssignale den Auswertekanälen zugeführt werden können. Somit können Empfangssignale mehrerer Antennen gleichzeitig ausgewertet werden, wobei mittels der erfindungsgemäßen Vorrichtung nur die Antennenbereiche ausgewertet werden, die in Abhängigkeit der momentanen Fahrsituation von besonderem Interesse sind.

Weiterhin ist es vorteilhaft, wenn die Anzahl der Ausgangskanäle kleiner oder gleich der Anzahl der Eingangssignale ist.

Besonders vorteilhaft ist es, dass vier Eingangskanäle und zwei oder drei Ausgangskanäle vorgesehen sind. Das Vorsehen von vier Eingangskanälen resultiert darin, dass vorteilhafterweise vier Sende- und Empfangsantennen vorgesehen werden, die mittels einfacher 3dB-Leistungsteiler versorgt werden können. Von jeder der vier Eingangsantennen wird somit ein Eingangskanal auf die erfindungsgemäße Vorrichtung geleitet, in der wahlweise zwei oder drei Ausgangskanäle an die Auswerteeinrichtung weitergeleitet werden, wobei die die Anzahl der auszuwertenden Antennenbereiche sowie deren Auswahl von der momentanen Fahrsituation also dem relativen Ort und der Anzahl der erkannten Radarobjekte abhängig gemacht werden kann.

Weiterhin ist es vorteilhaft, dass diese erfindungsgemäße Vorrichtung in einem Radarsensor zur adaptiven Abstands- und Geschwindigkeitsregelung insbesondere in einem Kraftfahrzeug verwendet wird.

Weiterhin ist es vorteilhaft, wenn die Zuordnung von Eingangskanälen zu Ausgangskanälen mindestens in Abhängigkeit der Anzahl und der relativen Position der vom Radarsystem erkannten Objekte bestimmt wird. Somit ist es möglich, dass ein Radarempfangsbereich, der nur von einer oder zwei Empfangsantennen erfaßt wird, zur Auswertung durch die erfindungsgemäße Vorrichtung durchgeleitet wird, wohingegen ein anderer Radarerfassungsbereich, der von einer anderen Antenne erfaßt wird, in dem aber momentan keine Radarobjekte detektiert wurden, nicht zur Auswertung weitergeleitet wird. Hierdurch ist es möglich, genau die Empfangsantennenbereiche auszuwerten, die in Abhängigkeit der momentanen Fahrsituation von besonderem Interesse sind.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: ein Blockschaltbild des Radarsystems, in dem die erfindungsgemäße Vorrichtung verwendet wird,
- Figur 2: ein Schaltbild des internen Aufbaus der erfindungsgemäßen Vorrichtung,
- Figur 3: ein Ersatzschaltbild der erfindungsgemäßen Vorrichtung in einem ersten Betriebsmodus,

- Figur 4: ein Ersatzschaltbild der erfindungsgemäßen Vorrichtung in einem zweiten Betriebsmodus,
- Figur 5: ein Ersatzschaltbild der erfindungsgemäßen Vorrichtung in einem dritten Betriebsmodus,
- Figur 6: ein Ersatzschaltbild der erfindungsgemäßen Vorrichtung in einem vierten Betriebsmodus,
- Figur 7: ein Ersatzschaltbild der erfindungsgemäßen Vorrichtung in einem fünften Betriebsmodus,
- Figur 8: ein Ersatzschaltbild der erfindungsgemäßen Vorrichtung in einem sechsten Betriebsmodus.

### Beschreibung von Ausführungsbeispielen

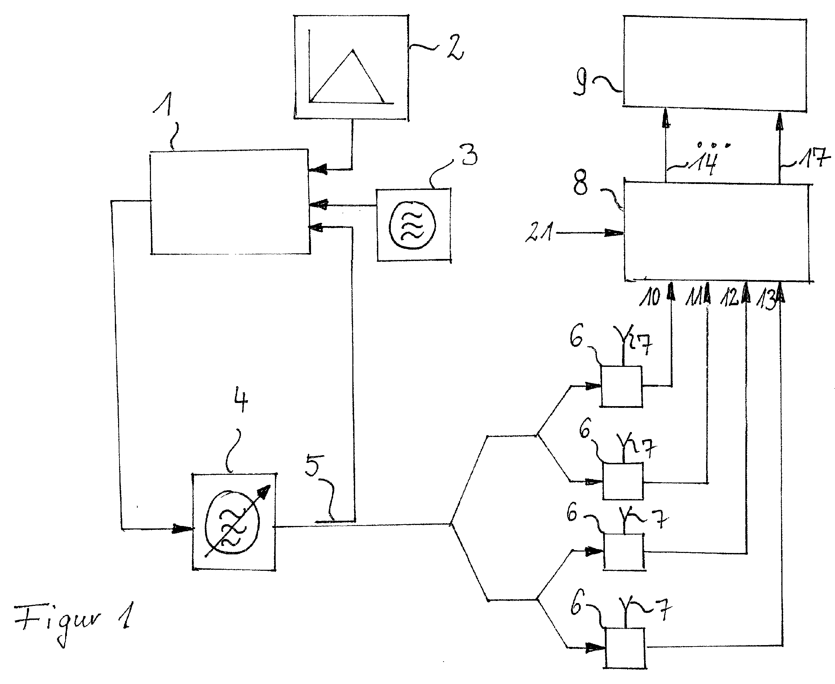

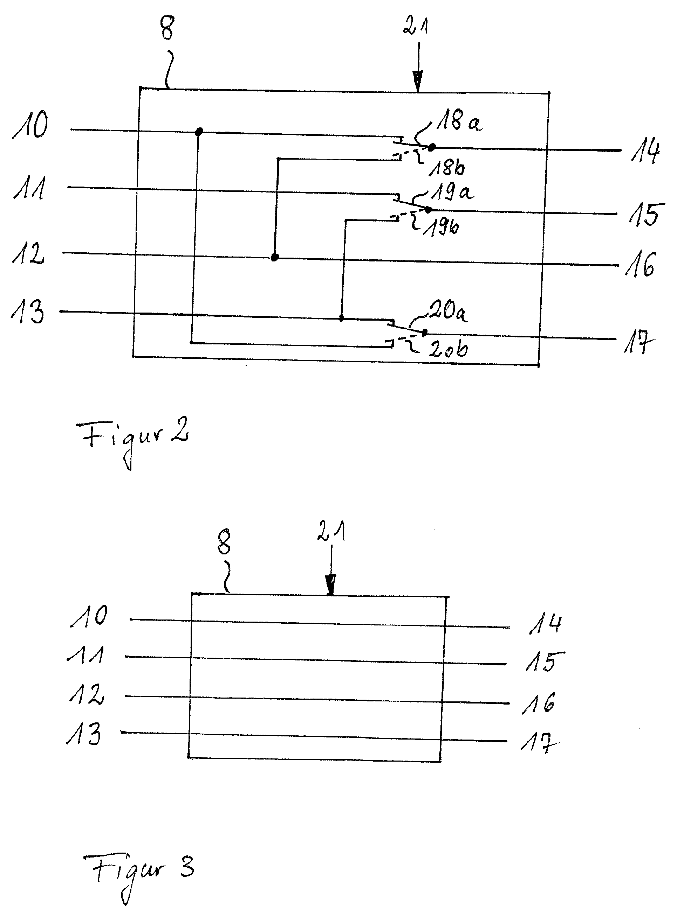

In Figur 1 ist ein Blockschaltbild eines Radarsystems dargestellt, in dem die erfindungsgemäße Vorrichtung beispielhaft Verwendung finden kann. Zu erkennen ist ein erster Schaltblock 1, in dem die Frequenzregelung eines Radaroszillators stattfindet. Diese Frequenzregelung in Block 1 erhält als Eingangssignale zum einen ein Rampensignal, mit dem das Radarsignal moduliert werden soll, die von einem Rampengenerator 2 generiert wird. Weiterhin erhält die Frequenzregelung 1 als Eingangssignal das Ausgangssignal eines Referenzoszillators 3. Dieser Referenzoszillator 3 schwingt im Allgemeinen mit einer fest eingestellten Frequenz. Als weiteres Eingangssignal der Frequenzregelgung 1 wird ein Teil des Oszillatorausgangssignals zugeführt, das mittels eines Leistungsteilers 5 vom Ausgangssignal des Gunn-Oszillators 4 abgezweigt wird und der Frequenzregelung 1 zugeführt wird. Die Frequenzregelung 1 erzeugt in Abhängigkeit der beschriebenen Eingangssignale ein Ausgangssignal, das dem Gunn-Oszillator 4 zugeführt wird. Dieser Gunn-Oszillator 4 erzeugt ein Radarsignal, das vorteilhafterweise als frequenzmoduliertes Dauerstrich-Signal oder kurz als FMCW-Signal ausgeprägt ist. Dieses zu sendende Ausgangssignal des Gunn-Oszillators 4 wird mittels des Leistungsteilers 5 wiederum der Frequenzregelung 1 zugeführt um somit über einen rückgekoppelten Regelkreis ein exaktes Radarsignal zu erzeugen. Der größere Teil des Ausgangssignals des Gunn-Oszillators 4 wird über Leistungsteiler den Sendeantennen 7 zugeführt. Hierzu eignet sich vorteilhafterweise die Verwendung von vier Sendeantennen, die über drei Leistungsteiler, die vorteilhafterweise als 3dB-Leistungsteiler ausgeführt sind, die Sendeleistung auf die einzelnen Sendeantennen verteilen. Die Zuführung dieser Sendesignale zu den Sende- und Empfangsantennen 7 erfolgt über Antennenweichen 6, die die Sende- und Empfangssignale voneinander trennen können. So bewirkt die Antennenweiche 6, dass das Sendesignal, das von dem Gunn-Oszillator 4 ausgegeben wird, der Sende- und Empfangsantenne 7 zugeführt wird, jedoch nicht am dritten Ausgang, der zur Auswerteeinrichtung führt, ausgegeben wird. Das mittels der Sende- und Empfangsantennen 7 ausgesandte Radarsignal wird an möglicherweise vorhandenen Objekten reflektiert und zu den Sende- und Empfangsantennen 7 zurückgestreut. Diese Sende- und Empfangsantennen 7 empfangen die rückgestreuten Radarsignale und leiten diese mittels der Antennenweichen 6 in Richtung der Auswerteeinheit weiter. Die Antennenweiche 6 besteht vorteilhafterweise aus einem Rat-Race-Ring, einem Zirkulator, einem Mischer, einem Doppel-Rat-Race-Ring bei dem zwei einzelne Rat-Race-Ringe miteinander verbunden sind oder einer Kombination hieraus. Vorteilhafterweise enthält die Antennenweiche 6 einen Mischer, der das Empfangssignal mit dem Sendesignal mischt und ein demoduliertes Empfangssignal erzeugt, das zur Weiterverarbeitung in Richtung der Auswerteeinrichtung 9 ausgegeben wird. Die Ausgangssignale der Antennenweichen 6 werden der erfindungsgemäßen Vorrichtung 8 als Eingangssignale 10, 11, 12, 13 zugeführt. In der erfindungsgemäßen Vorrichtung 8, deren interner Aufbau in Figur 2 näher erläutert ist, werden die Eingangssignale 10, 11, 12, 13 Ausgangskanälen 14 bis 17 zugeordnet, wobei die Anzahl der Ausgangskanäle 14 bis 17 gleich oder kleiner der Anzahl der Eingangssignale 10, 11, 12, 13 ist. Die Ausgangssignale 14 bis 17 werden mindestens einer Auswerteeinrichtung 9 zugeführt, die mindestens zwei Auswertekanäle umfaßt. Es ist auch denkbar, dass die Ausgangskanäle 14 bis 17 an zwei eigenständige Auswerteeinrichtungen 9 weitergegeben wird, die jeweils nur einen einzigen Auswertekanal umfassen. In der mindestens einen Auswerteeinrichtung 9 werden die demodulierten Empfangssignale beispielsweise einer Fouriertransformation unterworfen, eine Spektralanalyse durchgeführt oder weitere Auswerteschritte vorgenommen. Die Zuordnung der Eingangssignale 10, 11, 12, 13 zu den Ausgangskanälen 14 bis 17, die in der erfindungsgemäßen Vorrichtung 8 vorgenommen wird, geschieht in Abhängigkeit zugeführter Steuersignale 21. Die zugeführten Steuersignale 21 können vorteilhafterweise aus der Auswerteeinrichtung 9 zugeführt werden und repräsentieren die Information, welche der Eingangssignale 10, 11, 12, 13 auf die Ausgangskanäle 14 bis 17 ausgegeben werden sollen.

In Figur 2 ist ein Funktionsschaltbild der erfindungsgemäßen Vorrichtung 8 dargestellt. Zu erkennen sind die Eingangssignale 10, 11, 12, 13, die der Vorrichtung 8 zugeführt werden. Diese Eingangssignale werden in Abhängigkeit der Stellungen der Schalter 18, 19, 20 auf die Ausgangskanäle 14, 15, 16, 17 ausgegeben.

Wird mittels der Steuersignale 21, die der Vorrichtung 8 zugeführt werden, festgelegt, dass die Schalter 18, 19, 20 momentan in den Schalterstellungen a zu betreiben sind, so ergibt sich, dass der Eingang 10 auf den Ausgang 14, der Eingang 11 auf den Ausgang 15, der Eingang 12 auf den Ausgang 16 sowie der Eingang 13 auf den Ausgang 17 auszugeben sind. Es ergibt sich in diesem Betriebsfall ein Ersatzschaltbild für die Vorrichtung 8 gemäß Figur 3. In diesem Fall sind insgesamt vier Auswertekanäle vorgesehen, so dass alle vier Eingänge durch die Auswerteeinrichtung 9 verarbeitet werden.

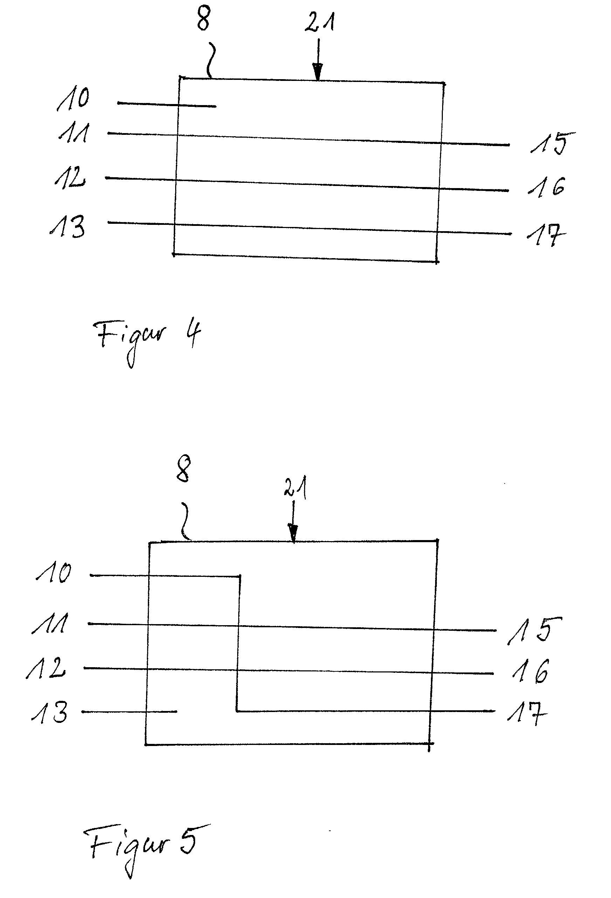

Ist es vorgesehen, nur drei Auswertekanäle 15, 16, 17 auszuwerten, wodurch sich eine Ersparnis von einem Auswertekanal ergibt, so werden über den Steuersignaleingang 21 die Schalterstellungen entsprechend verändert. In diesem Fall ist der Schalter 19 in der Schalterstellung a zu betreiben. Die Schalterstellung 18 ist in diesem Fall nicht von Relevanz, da der Ausgangskanal 14 nicht ausgewertet wird. Der Schalter 20 ist entweder in Schalterstellung b zu betreiben für den Fall, dass das Eingangssignal 10 auf den Ausgangskanal 17 ausgegeben werden soll oder es ist Schalter 20 in Schalterstellung a zu betreiben, für den Fall, dass das Eingangssignal 13 auf den Auswertekanal 17 ausgegeben werden soll. In beiden Fällen wird das Eingangssignal 12 auf den Auswertekanal 16 ausgegeben. Für diese beiden beschriebenen Fälle, in denen die Auswertekanäle 15, 16, 17 ausgewertet werden, ergibt sich im Falle der Schalterstellung 20a ein Ersatzschaltbild für die Vorrichtung 8 gemäß Figur 4 und für den Fall der Schalterstellung 20b ein Ersatzschaltbild für die Vorrichtung 8 gemäß Figur 5.

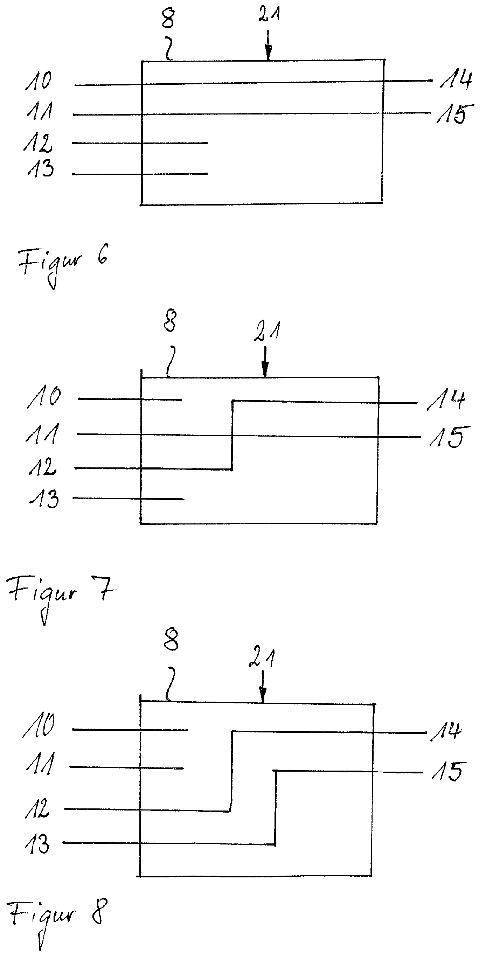

In einem weiteren Fall ist es vorgesehen, dass nur zwei Auswertekanäle in der Vorrichtung 9 zur Verfügung stehen. In diesem Fall werden die Ausgangskanäle 14 und 15 der Auswerteeinrichtung zugeführt, wobei dies selbstverständlich auch zwei andere Ausgangskanäle der Vorrichtung 8 sein können. In dem Fall, dass die Eingangssignale 10 und 11 der Auswerteeinrichtung zugeführt werden sollen, wird mittels der Steuersignale 21 der Schalter 18 in Stellung a betrieben und Schalter 19 ebenfalls in Stellung a betrieben. Die Schalterstellung des Schalters 20 ist bei der Auswahl der beiden Ausgangskanäle 14 und 15 nicht von Bedeutung, da der Ausgangskanal 17 nicht ausgewertet wird. In dem beschriebenen Fall, dass die Eingangssignale 10 und 11 auf die Auswertekanäle 14 und 15 ausgegeben werden sollen ergibt sich aufgrund der beschriebenen Schalterstellung für diesen Betriebszustand ein Ersatzschaltbild der Vorrichtung 8 gemäß Figur 6. Ist es vorgesehen, die Eingangssignale 11 und 12 den Auswertekanälen 14 und 15 zuzuleiten, so wird mittels der Steuersignale 21 der Schalter 18 in Stellung b betrieben und Schalter 19 in Stellung a. In diesem Fall ergibt sich als Ersatzschaltbild für die Vorrichtung 8 ein Zustand wie er in Figur 7 dargestellt ist. Ist es vorgesehen, die Eingangssignale 12 und 13 den Auswertekanälen 14 und 15 zuzuleiten, so muß mittels der Steuersignale 21 der Schalter 18 in Stellung b und Schalter 19 ebenfalls in Stellung b betrieben werden. In diesem Fall ergibt sich ein Ersatzschaltbild der Vorrichtung 8 gemäß Figur 8.

Durch die Reduzierung der Anzahl der Auswertekanäle, die der Vorrichtung 9 zugeführt werden, reduziert sich der Signalverarbeitungsaufwand in einem beträchtlichem Ausmaß. Bei der Verwendung von drei Auswertekanälen ist es möglich, die zwei zentralen Antennenkeulen, die ihre Auswertesignale den Eingangssignalen 11 und 12 zuführen, sowie eine Antennenkeule im Randbereich, die ihre Auswertesignale dem Eingangssignal 10 bzw. 13 zuführt, auszuwerten. Hierdurch kann das Ortungsfeld des Radarsensors an die momentane Fahrsituation angepaßt werden. Beispielsweise ist es möglich, in Kurven den kurveninneren Ortungsbereich auszuwerten und den uninteressanten kurvenäußeren Ortungsbereich nicht auszuwerten. Es ist auch möglich, die Auswertung der Ortungsrandbereiche in Abhängigkeit der benutzten Fahrspur zu steuern. Bei der Verwendung von zwei Auswertekanälen ist es weiterhin möglich, eine Lateralpositionsbestimmung der erkannten Objekte durchzuführen, da immer zwei benachbarte Antennenkeulen mit einem Überlappungsbereich ausgewertet werden.

## Patentansprüche

1. Vorrichtung für ein Radarsystem,
**dadurch gekennzeichnet,**
**dass** dieser Vorrichtung (8) als Eingangssignale Empfangssignale (10 bis 13) mindestens zweier Empfangsantennen (7) zuführbar sind,
**dass** die Ausgangssignale (14 bis 17) dieser Vorrichtung (8) mindestens einer Einrichtung zur Auswertung der Empfangssignale (9) zuführbar sind, die mindestens zwei Auswertekanäle umfaßt, und dass die Vorrichtung (8), den mindestens zwei Auswertekanälen (14), in Abhängigkeit zuführbarer Steuersignale (21) unterschiedliche Eingangskanäle (10 bis 13) zuordnet.

2. Vorrichtung nach Anspruch 1, **dadurch gekennzeichnet, dass** die Eingangssignale der Vorrichtung demodulierte Empfangssignale sind.

3. Vorrichtung nach Anspruch 1, **dadurch gekennzeichnet, dass** zeitgleich mehrere Eingangssignale den Auswertekanälen zugeführt werden können.

4. Vorrichtung nach Anspruch 1, **dadurch gekennzeichnet, dass** die Anzahl der Ausgangskanäle (14 bis 17) kleiner oder gleich der Anzahl der Eingangssignale (10 bis 13) ist.

5. Vorrichtung nach Anspruch 1, **dadurch gekennzeichnet, dass** 4 Eingangskanäle und 2 oder 3 Ausgangskanäle vorgesehen sind.

6. Vorrichtung nach Anspruch 1, **dadurch gekennzeichnet, dass** diese in einem Radarsensor zur adaptiven Abstands- und Geschwindigkeitsregelung, insbesondere in einem Kraftfahrzeug verwendet wird.

7. Vorrichtung nach Anspruch 6, **dadurch gekennzeichnet, dass** die Zuordnung von Eingangskanälen zu Ausgangskanälen mindestens in Abhängigkeit der Anzahl und der relativen Position der vom Radarsystem erkannten Objekte bestimmt wird.
